# EUROPÄISCHE PATENTSCHRIFT

(11) **EP 0 990 355 B1**
(45) Veröffentlichungstag und Bekanntmachung des Hinweises auf die Patenterteilung: **27.03.2002**
(21) Anmeldenummer: 97924849.9
(22) Anmeldetag: 16.06.1997
(51) Int. Cl.: H04Q 7/32, G07F 7/10, G06K 19/07

(54) **CHIPKARTE UND VERFAHREN ZUR KOMMUNIKATION ZWISCHEN EINER EXTERNEN VORRICHTUNG UND EINER CHIPKARTE**
CHIP CARD AND METHOD FOR COMMUNICATION BETWEEN AN EXTERNAL DEVICE AND A CHIP CARD
CARTE A PUCE ET PROCEDE DE COMMUNICATION ENTRE UN DISPOSITIF EXTERNE ET UNE CARTE A PUCE

(43) Veröffentlichungstag der Anmeldung: 05.04.2000
(73) Patentinhaber: Swisscom Mobile AG, 3050 Bern (CH)
(72) Erfinder: RITTER, Rudolf, CH-3052 Zollikofen (CH); BOUQUET, Hanspeter, CH-3032 Hinterkappelen (CH); HEUTSCHI, Walter, CH-3303 Jegensdorf (CH)
(74) Vertreter: BOVARD AG - Patentanwälte
(86) Internationale Anmeldenummer: CH9700237
(87) Internationale Veröffentlichungsnummer: WO9858509

(56) Entgegenhaltungen:
- EP-A- 0 159 539
- EP-A- 0 555 992
- WO-A-96/38814
- DE-A- 4 321 381
- GB-A- 2 298 613
- GB-A- 2 306 241

## Beschreibung

Die vorliegende Erfindung bezieht sich auf eine Chipkarte gemäss dem Einleitungsteil des Patentanspruches 1, auf eine Mobilstation gemäss dem Einleitungsteil des Patentanspruches 7, auf eine Vorrichtung, welche in der Lage ist, mit einer erfindungsgemässen Chipkarte zu kommunizieren, sowie auf verschiedene Verfahren und Anwendungen dieser Verfahren zur Kommunikation zwischen einer Chipkarte und einer externen Vorrichtung. Genauer ausgedrückt bezieht sich die vorliegende Erfindung auf das Problem der Kommunikation zwischen einer Chipkarte, insbesondere einer Chipkarte des SIM-Typs, welche dazu bestimmt ist, zum Beispiel in einem Zellulartelefon, beispielsweise im GSM-Format, verwendet zu werden, mit einer externen Vorrichtung.

In den Mobiltelefon-Netzen wie beispielsweise im GSM-Netz (Global System for Mobile Communication) wird die Identität der Abonnenten in einer SIM (Subscriber identity Module)-Karte genannten Chipkarte gespeichert. Die SIM-Karte ist wegnehmbar, so dass der Benutzer die für ihn bestimmten Anrufe auf dem Mobilgerät seiner Wahl empfangen kann, indem er die SIM-Karte von einem auf ein anderes Gerät überträgt. Ausserdem sind Verfahren bekannt zum Laden der SIM-Karte mit einem Geldbetrag auf verschiedene Arten sowie zum Belasten dieses Betrages mit den Telefon-Kommunikationstaxen. Die Mobilstationen (MS, Mobile Stations), wie zum Beispiel Zellulartelefone des GSM-Typs, werden folglich aus zwei Elementen gebildet, dem mobilen Gerät und der SIM-Chipkarte.

Die SIM-Karten existieren heute in zwei genormten Formaten. Das "Full Size"-Format entspricht der Grösse einer Kreditkarte, während das "Plug-In"-Format, weiches speziell an die miniaturisierten tragbaren Telefone angepasst ist, ungefähr 25 mm x 10 mm gross ist. Die Funktionalitäten der Karten mit diesen zwei Formaten sind identisch.

Die SIM-Karten enthalten im allgemeinen Datenverarbeitungsmittel, meistens einen in einem Chip integrierten Mikrokontroller. Diese Verarbeitungsmittel enthalten einerseits eine Zone mit einem Schreib-/Lese- (Zwischen) und/oder einem Nurlese-Speicher, welche das Abspeichern von Programmen und/oder Dateien erlaubt, insbesondere der Identifikationsdaten des die Karte besitzenden Abonnenten, sowie Berechnungs- und Verarbeitungsmittel, welche in der Lage sind, verschiedene Algorithmen auszuführen, insbesondere Algorithmen, welche die Durchführung der Abonnenten-Identifikation und der Kommunikationsverschlüsselung erlauben.

Diese Architektur der SIM-Karten, bei welcher bestimmte Aspekte im Rahmen der GSM-Norm standardisiert sind, ist sehr "offen", so dass an verschiedene Systeme von Mehrwertdiensten (VAS, Value Added Services) gedacht worden ist, welche voll von den Funktionalitäten dieser Karten Nutzen ziehen können. Insbesondere wurde an zahlreiche Dienste gedacht, welche den auf den SIM-Karten verfügbaren Speicher und/oder die Verarbeitungsmöglichkeiten des Mikrokontrollers auf der Karte zur Erweiterung der Funktionalitäten der drahtlosen Telefone verwenden.

Neue Daten oder neue Programme, welche für die Ausführung dieser neuen Mehrwertdienste notwendig sind, können im allgemeinen auf eine der drei folgenden Arten auf die Karte geladen werden :
1) Durch Einführen der Karte in eine geeignete Lese-/Schreib-Vorrichtung für Chipkarten. Die ursprünglich, d.h. bevor sie dem Kunden geliefert wird, auf die Karte geladenen Daten werden im allgemeinen auf diese Weise geladen. Dieses Verfahren kann jedoch nicht auf einfache Weise allgemein zum Aufdatieren oder Vervollständigen der auf der Karte eingetragenen Informationen nach ihrer Verteilung angewendet werden, dies aus Gründen der geringen Verbreitung der Lese-/Schreib-Vorrichtung für Chipkarten. Ausserdem muss die SIM-Karte aus der Mobilstation herausgezogen werden, um sie in eine andere Vorrichtung einzuführen, was nicht sehr praktisch ist, insbesondere für den Fall der sehr kleinen, nicht sehr praktisch zu handhabenden "Plug-In"-Karten.
2) Durch direktes Eintippen von Daten auf der Tastatur der Mobilstation. Aus Gründen der stark reduzierten Grösse der normalerweise für die Mobiltelefone verwendeten Tastaturen sowie der beschränkten Anzahl Tasten ist diese Lösung nur für die Eingabe von sehr kurzen Daten geeignet, zum Beispiel für ein Passwort oder eine Antwort des Ja-/Nein-Typs während der Programm-Ausführung durch den Mikrokontroller der Karte, jedoch keinesfalls für die Eingabe vollständiger Programme in die SIM-Karte.
3) Die Daten und/oder Programme können auf die Mobilstation ferngeladen, zum Beispiel in Form von Kurzmeldungen (Short Messages), die einen Meldungskopf enthalten, welcher der Mobilstation ermöglicht, diese als solche zu identifizieren, und dann von der Mobilausrüstung auf die Karte übertragen werden. Diese Übertragung kann in beiden Richtungen erfolgen. Das auf den Namen der Anmelderin lautende Patentdokument EP689368 beschreibt eine Technik, welche das Fernladen von Daten und Programmen auf eine Mobilstation in transparenter Weise ermöglicht. Diese Übertragungsart kann jedoch nur von einer anderen, mit dem mobilen Funknetz verbundenen Station aus erfolgen, zum Beispiel von einem anderen Mobiltelefon aus. Die Übertragung kann ausserdem nur zum Preis der Aufnahme einer im allgemeinen gebührenpflichtigen Kommunikation im mobilen Funknetz erfolgen.

Die auf den Namen der Anmelderin lautende Patentanmeldung PCT/CH96/00464 (WO 98/28900) beschreibt ein Bestellverfahren für Produkte oder Informationen mittels einer Mobilstation. Ein das Produkt und seinen Lieferanten unzweideutig bezeichnender Code muss in die Mobilstation eingegeben werden und wird dann zusammen mit den Identifikationsdaten des Abonnenten dem Produktlieferanten in Form von Kurzmeldungen über das mobile Funknetz übermittelt. Der Produktcode muss eine grosse Zahl von alphanumerischen Zeichen umfassen, damit das Produkt und der Produktlieferant unzweideutig bezeichnet werden. Ausserdem sind Kontrollzeichen (Parität) notwendig, um eventuelle Fehler im Produktcode zu erkennen oder zu korrigieren. Keines der obenerwähnten Mittel erweist sich als wirklich geeignet, diesen Informationstyp auf komfortable Weise in die Mobilstation einzugeben.

Umgekehrt verlangt eine bestimmte Anzahl von neuen Mehrwertdiensten, dass von einer externen Vorrichtung aus, zum Beispiel von einem anderen Telefon aus, auf die in einer SIM-Karte gespeicherten Daten oder Programme zugegriffen werden kann.

Verschiedene Patentdokumente, insbesondere in der Gruppe H04M-001/00 der internationalen Patentklassifikation klassierte Dokumente, beschreiben Systeme, welche das Eingeben von Daten, zum Beispiel von Wahlimpulsen oder -Tönen, in einen Telefonhandapparat ermöglichen. Diese Dokumente, zum Beispiel DE2427527 oder US4130738, verlangen jedoch im allgemeinen Anpassungen des Telefonhandapparates und können deshalb nicht für den Datenaustausch mit einer konventionellen Mobilstation verwendet werden. Ausserdem erlauben diese Dokumente nur eine Einweg-Kommunikation, im allgemeinen von einer externen Vorrichtung zum Telefonhandapparat. Dies ist besonders beim Patentdokument EP0506544 der Fall. Schliesslich beziehen sich diese Dokumente im allgemeinen nicht auf die Übertragung von Daten oder Programmen in die Speicherzone einer in eine Mobilstation eingeführten SIM-Chipkarte.

in der Patentanmeldung WO 96/38814 wird eine Telefonkarte mit Kontakten beschrieben, die zusätzlich mit einer drahtlosen Schnittstelle für eine andere Anwendung, beispielsweise zur Verwendung als Fahrschein, versehen ist. Diese Karte enthält allerdings keine Abonnentenidentifizierung und kann nicht als SIM-Karte eingesetzt werden.

In der Patentanmeldung GB 2 298 613 A wird eine SIM-Karte mit einer ersten kontaktbehafteten Schnittstelle zur Verbindung mit einem Mobilfunktelefon beschrieben, welche zusätzlich eine zweite kontaktbehaftete Schnittstelle für die Verbindung mit einem externen Gerät aufweist. Bevor diese SIM-Karte gemäss GB 2 298 613 mit einem externen-Gerät verbunden werden kann muss sie allerdings aus dem Mobilfunktelefon entfernt werden.

In der Patentanmeldung GB 2 306 241 A wird eine Aufnahmevorrichtung beschrieben, welche Chipkarten aufnehmen kann um Daten von einer ersten Chipkarte auf eine zweite Chipkarte oder über einen Personal Computer und eine Netzwerkverbindung auf eine entfernte Station zu übertragen. Auch gemäss GB 2 306 241 A kann eine Chipkarte nicht gleichzeitig in einem Mobilfunktelefon und in der Aufnahmevorrichtung eingeführt sein.

In der Patentanmeldung EP 555 992 A1 wird ein Adapter für Mobilfunktelefone beschrieben, der eine SIM-Karte aufnehmen kann und der über eine Datenschnittstelle und Konvertierungsmittel verfügt um Daten, beispielsweise von einem Personal Computer, zu empfangen, in SMS (Short Message Service) Format zu konvertieren und an das Mobilfunktelefon zu übertragen. Die SIM-Karte muss aus dem Mobilfunktelefon entfernt werden um den Adapter gemäss EP 555 992 A1 mit dem Mobilfunktelefon zu verbinden.

In der Patentanmeldung DE 43 21 381 A1 wird ein Geräteadapter, beispielsweise für Mobilfunktelefone, beschrieben der temporär über eine Kartenschnittstelle mit dem betreffenden Gerät verbunden werden kann um ab einem Personal Computer oder ab einem im Geräteadapter enthaltenen Speicher neue Versionen von Softwareprogrammen in das Gerät zu laden. Eine üblicherweise mit dem Gerät verbundene Karte, beispielsweise eine SIM-Karte, muss aus dem Gerät entfernt werden um den Adapter gemäss DE 43 21 381 A1 mit diesem Gerät zu verbinden.

Es ist folglich ein Ziel der Erfindung, eine Vorrichtung und ein Verfahren für die Kommunikation vorzuschlagen, welche für die Zweiwegübertragung von Daten und Programmen zu einer SIM-Chipkarte oder von dieser ausgehend geeignet sind.

Es ist ein weiteres Ziel der Erfindung, ein Telekommunikations-System vorzuschlagen, welches nicht die Unzulänglichkeiten der Systeme der bisherigen Technik aufweist.

Erfindungsgemäss werden diese Ziele besonders mithilfe einer Chipkarte erreicht, welche die Elemente des Kennzeichnungsteils des Patentanspruches 1 aufweist, einer Mobilstation, welche die Elemente des Kennzeichnungsteils des Patentanspruches 7 aufweist, einer Datenverarbeitungs-Vorrichtung, welche die Elemente des Kennzeichnungsteils des Patentanspruches 15 aufweist, und eines Verfahrens, welches die Elemente des Kennzeichnungsteils des Patentanspruches 21 aufweist.

Insbesondere werden die Ziele der Erfindung mithilfe einer Chipkarte erreicht, zum Beispiel mit einer SIM-Karte, welche mindestens eine drahtlose Schnittstelle aufweist, die den Verarbeitungsmitteln der Karte ermöglicht, direkt mit einer ausserhalb der mobilen Kommunikationsvorrichtung befindlichen externen Vorrichtung zu kommunizieren, wobei weder die elektrischen Kontakte der Chipkarte noch die Mobilstation passiert werden.

Bei einer bevorzugten Ausführungsform der Erfindung weist die drahtlose Schnittstelle mindestens eine Spule auf und erfolgt die direkte Kommunikation zwischen der SIM-Chipkarte und einer externen Vorrichtung folglich über elektromagnetische Wellen.

So können Daten durch eine externe Vorrichtung, zum Beispiel ein anderes drahtloses Telefon oder irgendeine beliebige Datenverarbeitungs-Vorrichtung, direkt in die Chipkarte eingeschrieben oder von der Karte ausgelesen werden.

Ein Vorteil der Erfindung besteht darin, dass diese angewendet werden kann, ohne dass zwingend Änderungen an den mobilen Kommunikationsausrüstungen erforderlich sind. Die eine erfindungsgemässe drahtlose Schnittstelle aufweisende SIM-Chipkarte kann so durch einen Netzverwalter denjenigen Abonnenten verteilt werden, welche einen Mehrwertdienst abonniert haben, der dafür geeignet ist, von den Möglichkeiten dieser Karte Nutzen zu ziehen, und durch diese Abonnenten direkt verwendet werden, indem sie diese einfach in eine konventionelle Mobilstation einführen. Es ist folglich nicht notwendig, die existierenden Ausrüstungen zu ersetzen oder zu ändern, mit Ausnahme der Chipkarten, welche mit sehr geringen Kosten hergestellt werden können.

Die vorliegende Erfindung bezieht sich ebenfalls auf verschiedene Verfahren und Dienste, welche dank der Karte gemäss der vorliegenden Erfindung angewendet werden können.

Die vorliegende Erfindung wird mithilfe der als Beispiel gegebenen Beschreibung besser verständlich und durch die anliegenden Figuren veranschaulicht, welche folgendes zeigen :

Die Figur 1 eine schematische und perspektivische Ansicht einer Mobilstation, in welche eine erfindungsgemässe Chipkarte eingeführt ist, sowie einer erfindungsgemässen externen Vorrichtung.

Die Figur 2 eine schematische Ansicht einer erfindungsgemässen Chipkarte.

Obschon sich die in der Beispielsform gegebene Beschreibung insbesondere auf den Spezialfall einer zusammen mit einem tragbaren Telefon des GSM-Typs verwendeten Chipkarte des SIM-Typs (Subscriber Identity Module) bezieht, ist es wichtig, zu verstehen, dass diese ebenso mit jedem anderen Mobilstationstyp zusammen verwendet werden kann, zum Beispiel mit den Typen GSM, PCN, NMT, TACS, PDC, DCS1800 oder mit irgendeiner anderen Norm der mobilen Kommunikation, sowie mit jedem zum Speichern von Abonnentenidentitäts-Informationen in einem mobilen Kommunikationsnetz verwendeten Chipkartentyp.

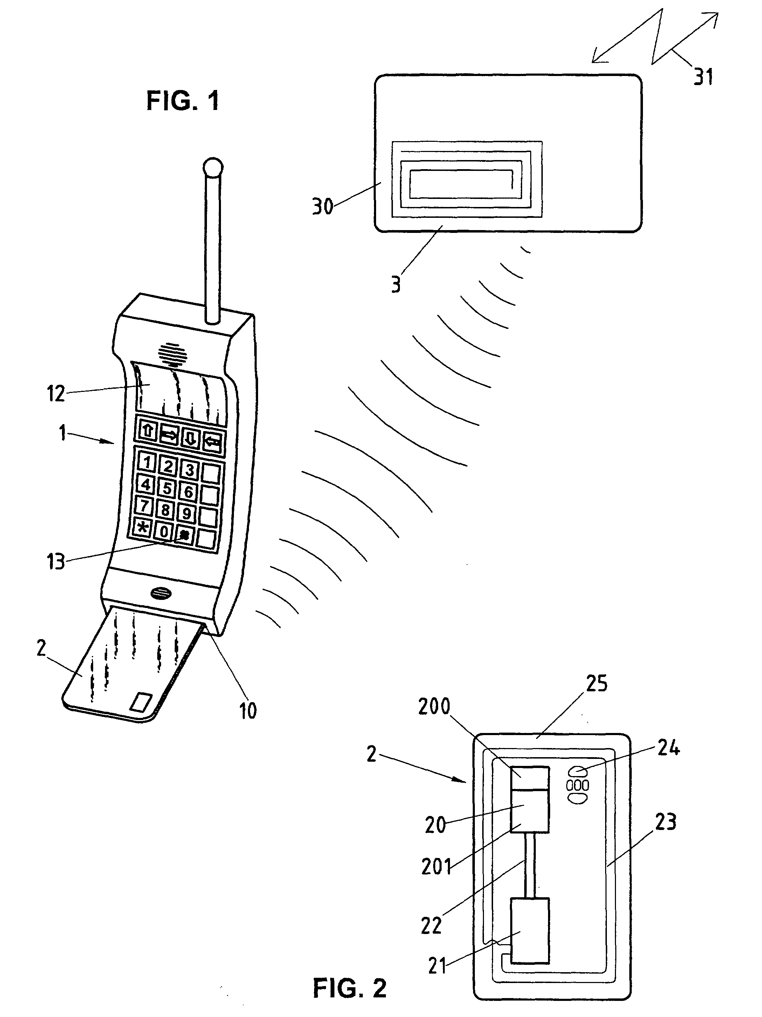

Die Figur 2 veranschaulicht in schematischer Weise eine Ausführungsform einer erfindungsgemässen SIM-Chipkarte. Die Chipkarte 2, in diesem Beispiel eine Karte im Kreditkartenformat ("Full Size") weist einen konventionellen Mikrokontroller 20 auf, welcher in den Kunststoffträger 25 der Karte eingelassen und für die SIM-Funktionalitäten der Karte zuständig ist. Der Mikrokontroller 20 weist eine Schreib-/Lese- und/oder Nurlese-Speicherzone 200 sowie eine Datenverarbeitungszone 201 auf, welche in einem einzigen integrierten Schaltkreis vereinigt sind. Der Mikrokontroller 20 ist für die Anwendung der SIM-Funktionalitäten der Karte verantwortlich, wie sie zum Beispiel im Artikel "SIM CARDS" von T. Grigorova und I. Leung beschrieben werden, welcher im "Telecommunication Journal of Australia", Vol. 43, No. 2, 1993, auf den Seiten 33 bis 38 erschienen ist, sowie der neuen Funktionalitäten, welche zu einem späteren Zeitpunkt auf die SIM-Karten geladen werden. Die Chipkarte weist ebenfalls Kontaktmittel auf, zum Beispiel einen Bereich 24 mit acht metallischen Kontakten auf der Kartenoberfläche, über welche die Karte mit der Mobilstation 1 kommuniziert, in welche sie eingeführt ist. Die elektrische Versorgung der Karte, oder mindestens des Mikrokontrollers 20, erfolgt durch die Kommunikationsstation 1 mithilfe der Kontakte 24.

Gemäss der Erfindung weist die Chipkarte 2 einen zweiten integrierten Schaltkreis 21 auf, weicher für die direkte Kommunikation mit einer externen Vorrichtung 3 zuständig ist. Der zweite integrierte Schaltkreis wird über eine Schnittstelle 22 mit dem Mikrokontroller 20 verbunden. Die Chipkarte 2 weist ausserdem eine Spule 23 auf, welche mit dem zweiten integrierten Schaltkreis 21 verbunden und in den Kunststoffträger 25 der Chipkarte eingelassen wird. Die Spule 23 kann zum Beispiel durch Wickeln eines Drahtes oder durch eine beliebige andere geeignete Technik hergestellt werden. Die Integration einer Spule in eine Chipkarte wird heutzutage gut beherrscht und wird zum Beispiel in den Patentanmeldungen WO91/16718 und WO95/33246 (beide auf den Namen Gustafson) beschrieben. Im Fall einer Chipkarte im "Full Size"-Format wird die Spule vorzugsweise zwischen zwei Kunststoffträger-Schichten 25 einlaminiert, welche die Karte bilden. Im Fall einer "Plug-In"-SIM-Karte kann die Spule entweder in den Kunststoffträger eingelassen oder mittels Klebung oder irgendeinem anderen geeigneten Mittel am Äussern dieses Trägers befestigt werden.

Die in eine Mobilstation 1 eingeführte Chipkarte 2 kann dank dieser Schnittstelle 21, 23 direkt über elektromagnetische Wellen, vorzugsweise über Funkwellen mit einer nahe bei beispielsweise etwa 120KHz liegenden Frequenz, mit einer externen Vorrichtung 3 kommunizieren, welche in symbolischer Weise dargestellt und ebenfalls mit einer Spule oder einer Antenne 30 versehen wird. Die maximale Kommunikationsdistanz ist von den Eigenschaften der Spulen 23, 30 sowie von der Sendeleistung abhängig, welche derart gewählt wird, dass eine zu starke Beanspruchung der Energiereserven der Station 1 und der Karte 2 vermieden wird; eine Reichweite von mehreren Metern ist beispielsweise ohne grössere Probleme mittels konventioneller Techniken realisierbar. Es ist wichtig, darauf zu achten, dass die Aufnahmestelle 10 für die SIM-Karte in der Station 1 um die Spule 23 herum nicht elektromagnetisch abgeschirmt ist, damit eine Funkverbindung aufgebaut werden kann.

Auf diese Weise können Daten und/oder Programme in beiden Richtungen zwischen der externen Vorrichtung 3 und der Chipkarte 2 ausgetauscht werden. Es wird so möglich, auf einfache Weise Daten oder Programme auf den Speicher 200 der Chipkarte fernzuladen, diesen Speicher von einer externen Vorrichtung 3 aus zu benutzen oder darauf zuzugreifen, oder einen beliebigen Dialog- oder Monologtyp zwischen den Verarbeitungsmitteln 20 21 auf der Karte und einer beliebigen, für diesen Zweck geeigneten externen Vorrichtung 3 aufzubauen. Die Kommunikation zwischen der Chipkarte 2 und der externen Vorrichtung 3 erfolgt ohne Beanspruchung des mobilen Funknetzes (GSM), zu welchem die Station 1 gehört.

In diesem Beispiel wird die Chipkarte mit einem konventionellen Mikrokontroller 20, welcher Speichermittel 200 und Verarbeitungsmittel 201 aufweist, sowie mit einem Kommunikationsmodul 21 ausgerüstet, welche in der Form von zwei separaten integrierten Schaltkreisen implementiert werden. Diese Anordnung erlaubt es, Standard-Mikrokontroller 20, welche zu geringen Preisen verfügbar sind, zu verwenden und diesen ein spezifisches Kommunikationsmodul anzufügen. Der Fachmann wird jedoch feststellen, dass es ebenso möglich ist, das Kommunikationsmodul 21 im gleichen integrierten Schaltkreis wie der Mikrokontroller 20 zu integrieren, oder zum Beispiel einen Teil des Schreib-/Lese- und/oder Nurlesespeichers des Mikrokontrollers 20 in der Form eines separaten integrierten Schaltkreises zu implementieren.

Das Kommunikationsmodul 21 kann in gleicher Weise wie der Mikrokontroller 20 durch die Station 1 über Kontakte 24 gespeist werden. Bei einer bevorzugten Ausführungsform ist das Kommunikationsmodul energetisch vom Mikrokontroller 20 und von der Kommunikationsstation 1 unabhängig und wird durch die externe Vorrichtung 3 mithilfe der Spule 23 mit Energie versorgt. In diesem Fall wird vorzugsweise eine Speicherkapazität für die über die Spule 23 erhaltene Energie in der Chipkarte enthalten sein. Eine von der Station 1 oder über die Spule 23 gespiesene Pufferbatterie (Akku) kann auch auf der Karte vorhanden sein. Es ist auch möglich, zwei Spulen auf der Karte 2 anzuordnen, die eine zur eigentlichen Kommunikation mit der externen Vorrichtung 3 und die andere zur Energieversorgung des Moduls 21.

Die externe Vorrichtung 3 kann je nach der Anwendung durch einen beliebigen Apparat gebildet werden, welcher mit einer Schnittstelle 30 versehen wird, die es erlaubt, direkt über Funkwellen mit der Karte 2 zu kommunizieren, ohne Beanspruchung des mobilen GSM-Funknetzes. im einfachsten Fall kann die externe Vorrichtung 3 aus einer weiteren erfindungsgemässen Chipkarte bestehen, welche in eine andere Mobilstation 1 eingeführt wird. Die Erfindung erlaubt so, jeden beliebigen Typ von Daten oder Programmen auszutauschen, welche auf den SIM-Karten der beiden Apparate gespeichert sind. Je nach dem SIM-Kartentyp und je nach den Verwaltungsprogrammen dieser beiden Karten ist es zum Beispiel möglich, Programme und/oder Daten von der einen zur anderen Karte zu übertragen oder zu kopieren, welche die Funktionalitäten der Karte erweitern oder Zugriff geben auf neue Dienste. Falls die Karte einen Geldbetrag enthält, von welchem die Kommunikationstaxen abgezogen werden, ist es mit einem geeigneten Kommunikationsprogramm auch möglich, den gesamten oder einen Teil des Restbetrages von der einen Karte auf die andere zu übertragen und derart eine Chipkarte mit den auf einer anderen Karte verfügbaren Beträgen aufzuladen.

Bei einer Anwendungsvariante der Erfindung wird die externe Vorrichtung 3 durch einen Rechner oder ein Terminal gebildet, welcher/s mit einer geeigneten Funkschnittstelle 30 versehen wird. Die Vorrichtung 3 wird in diesem Fall vorzugsweise mit nicht dargestellten Dateneingabe-Mitteln versehen, zum Beispiel mit einer Tastatur, und mit nicht dargestellten Datenanzeige-Mitteln versehen, zum Beispiel mit einem Display (Bildschirm). Die Vorrichtung 3 wird ausserdem vorzugsweise mit einem Kommunikationsnetz 31 verbunden, zum Beispiel über ein nicht dargestelltes Modem mit einem "Internet"- oder "In-tranet"-Netz, oder mit einem beliebigen Typ eines ortsfesten oder mobilen Kommunikationsnetzes. In die Vorrichtung 3 eingegebene Daten oder Programme können dann mit Leichtigkeit über die Funkschnittstelle 30, 23 in die Chipkarte 2 kopiert werden; in umgekehrter Richtung können die in der Karte gespeicherten Daten zum Display der Vorrichtung 3 übertragen und dort angezeigt werden.

Ein interaktiver Dialog, bestehend aus einer Folge von Kommunikationen in jeder Richtung, ist ebenfalls möglich zwischen der Karte 2 und einem Rechner 3. Eine mögliche Anwendung eines solchen Dialoges betrifft die Auswahl einer Option in einem auf dem Display einer externen Vorrichtung 3 angezeigten Menu mithilfe des Mobiltelefons. Das Display der Vorrichtung 3 zeigt in diesem Fall ein Menu an, zum Beispiel eine Liste von zum Verkauf vorgeschlagenen Produkten oder von Informationen. Der Benutzer einer erfindungsgemässen Mobilstation 1 kann die Position eines Kursors in diesem Menu durch Betätigen der Kursorverschiebe-Tasten 13 auf der Tastatur seines Mobiltelefons steuern. Die Kursorverschiebe-Instruktionen werden von der Tastatur an die Chipkarte 2 übertragen und von dieser Karte mithilfe der Spule 23 zur Vorrichtung 3 gesendet. Der Benutzer betätigt eine Bestätigungstaste, zum Beispiel die Taste #, auf seiner Tastatur, um die ausgewählte Menuoption gültig zu erklären, zum Beispiel um ein Produkt zu bestellen. Der Bestätigungsbefehl wird in gleicher Weise bis zur Vorrichtung 3 übertragen, welche dann eine der ausgewählten Option entsprechende Routine ausführt. Die ausgeführte Routine kann zum Beispiel den Aufbau einer Kommunikation mit dem Lieferanten im ortsfesten oder mobilen Kommunikationsnetz 31 umfassen, mit welchem die Vorrichtung 3 verbunden ist, zum Beispiel über ein Modem, sowie die Übermittlung der Bestellung an diesen Lieferanten. In einer Variante umfasst die bei der Bestätigung einer Menuoption ausgeführte Routine die Aussendung einer Antwort durch die Schnittstelle 30 zur Chipkarte 2, zum Beispiel einen Identifikationscode des gewählten Produktes. Mindestens ein Teil der in dieser Antwort enthaltenen Daten, zum Beispiel der Identifikationscode des bestellten Produktes, werden dann in der Zone des Zwischenspeichers 200 der Chipkarte 2 gespeichert. Das auf die Chipkarte geladene Anwendungsprogramm kann dann zum Beispiel dem Produktlieferanten eine Kommunikation zusenden, zum Beispiel eine Kurzmeldung ("Short Message SMS"), welche diesen Produktidentifikations-Code enthält. Verschiedene andere Möglichkeiten von Produktbestellungen sind unter anderem in der Patentanmeldung PCT/CH96/00464 (WO 98/28900).

Natürlich kann die erfindungsgemässe Chipkarte 2 auch benutzt werden um nicht nur die Position eines Objektes zu steuern, sondern auch um mehrere Eigenschaften, wie z.B. Position, Farbe, Form, Funktion, Sichtbarkeit usw. von einem oder mehreren Objekten zu steuern.

Im Fall, wo das Menu auf dem Display der Vorrichtung 3 einer "Internet"- oder "Intranet"-Seite entspricht, welche zum Beispiel durch einen geeigneten "Browser" angezeigt wird, enthält die Kommunikation zwischen der Chipkarte und der Vorrichtung 3 vorzugsweise Instruktionen in der JAVA-Sprache (eingetragenes Warenzeichen von Sun Microsystems, Inc.), welche durch den genannten "Browser" direkt interpretiert werden können. Umgekehrt ist es ebenfalls erwünscht, dass die Verarbeitungsmittel 20, 21 auf der Karte Instruktionen in der JAVA-Sprache ausführen können, damit eine gerichtete Kommunikation ermöglicht wird, welche auf Instruktionen dieses überall bekannten Programmierstandards basiert. Andere vorzugsweise objekt-orientierte Sprachen wie beispielweise Corba oder C++ könnten auch benutzt werden.

Die externe Vorrichtung 3 kann beispielsweise auch durch eine monetäre Vorrichtung gebildet werden, zum Beispiel einen Geldmünz- oder Elektronikgeld- ("e-cash") Automaten, oder eine Registrierkasse in einem Ladengeschäft. Für den Fall, bei dem die externe Vorrichtung 3 durch einen Münzautomaten gebildet wird, kann dann die direkte Kommunikation mithilfe der Spulen 23, 30 zum Beispiel ermöglichen, den auf die Chipkarte 2 geladenen Geldbetrag vom Automaten aus nachzuladen. Der Vorteil besteht darin, dass die SIM-Karte nachgeladen werden kann, ohne dass sie aus dem Telefonhandapparat 1 herausgezogen werden muss und ohne Aufbau einer gebührenpflichtigen Funkkommunikation. Eine finanzielle Transaktion kann ebenfalls in der anderen Richtung erfolgen, durch Belastung des auf der Chipkarte 2 abgespeicherten Geldbetrages mit einem vorgegebenen Betrag und mit direkter Übermittlung des belasteten Betrages mithilfe der drahtlosen Schnittstelle gemäss der Erfindung zur externen Vorrichtung 3, zum Beispiel zu einem Automaten oder zur Registrierkasse eines Warenhauses. Eine Transaktion von Einkaufszahlungen in einem Ladengeschäft, welches mit Registrierkassen 3 ausgerüstet ist, die mit Schnittstellen 30 zum Kommunizieren mit den Chipkarten gemäss der Erfindung versehen sind, kann so die folgenden Schritte umfassen :
- Direkte Übermittlung des zu bezahlenden Betrages durch die Registrierkasse 3 zur Chipkarte 2.
- Zwischenspeicherung dieses Betrages im Speicher 200 der SIM-Chipkarte.
- Ausführung einer Routine durch den Mikrokontroller 20, damit der zu bezahlende Betrag auf dem Display 12 der Mobilstation 1 angezeigt wird.
- Bei Zustimmung zur angezeigten Zahl Bestätigung dieses Betrages durch den Kunden, zum Beispiel durch Drücken auf die #-Taste 13.
- Direkte Übermittlung dieses Bestätigungsbefehls zur Vorrichtung 3 mithilfe der Schnittstelle 23-30.

Der zu bezahlende Betrag kann zum Beispiel augenblicklich dem auf der Chipkarte 2 abgespeicherten Geldbetrag belastet werden. Falls der Geldbetrag auf der Karte 2 zur Begleichung der Transaktion genügt, kann der Transaktionsbetrag der Karte belastet werden und über die Schnittstelle 23, 30 zur Vorrichtung 3 transferiert werden, nach einem beliebigen Protokolltyp und den gleichen Sicherheits- und Vertraulichkeitsregeln, wie sie sich zum Beispiel für die "e-cash"-Transfers bewährt haben.

Bei einer Variante kann der Transaktionsbetrag durch irgendein Bank- oder Finanzinstitut, bei welchem der Abonnent Kunde ist, auf ein Bankkonto des Besitzers der Vorrichtung 3 transferiert werden. Zu diesem Zweck kann im Fall der Bestätigung des auf dem Display 12 angezeigten Betrages das auf die Chipkarte 2 geladene Programm eine Instruktion zur Aussendung einer einen Belastungsbefehl enthaltenden SMS-Kurzmeldung durch die Mobilstation 1 oder durch die Vorrichtung 3 zu einem Bankinstitut enthalten.

Die externe Vorrichtung 3 kann auch durch eine Zutrittskontroll-Vorrichtung gebildet werden, zum Beispiel durch eine Vorrichtung des Typs "elektronischer Pförtner", welche das Kontrollieren des Kommens und Gehens an einer geschützten Örtlichkeit erlaubt, zum Beispiel in einer Fabrik oder innerhalb der Umzäunung eines Attraktionsparkes. Für diese Anwendung kann die Chipkarte 2 mit einem im Speicher 200 abgespeicherten elektronischen Schlüssel geladen werden. Um in einer geschützten Zone der Örtlichkeit Zutritt zu erhalten, ist es also notwendig, dass eine direkte Kommunikation des beschriebenen Typs zwischen der Chipkarte 2 und der Vorrichtung 3 mithilfe der Spulen 23, 30 aufgebaut wird. Der Zutritt zur geschützten Örtlichkeit wird nur dann erlaubt, wenn es sich nach dieser Kommunikation erweist, dass der in der Karte 2 gespeicherte elektronische Schlüssel korrekt ist und seinem Besitzer das Recht zum Eindringen in die geschützte Zone gibt. Das Zutrittsverfahren kann die Aussendung umfassen von : einer Kommunikation, entweder durch die Kommunikationsstation 1 auf dem mobilen Funknetz oder durch die Zutrittskontroll-Vorrichtung 3 auf ihrem eigenen Kommunikationsnetz 31, einer Meldung des SMS-Typs, zum Beispiel für einen nicht dargestellten Zentralrechner bestimmt welcher die Ortsveränderungen innerhalb der Örtlichkeit verwaltet und registriert. Die Verwaltung der Ortsveränderungen kann zum Beispiel die Rechnungsstellung oder die Belastung des Kontos des Abonnenten mit einem von den erfolgten Zutritten abhängigen Betrag zur Folge haben. Bei dieser Anwendung ist vorteilhaft, dass das Elektronikmodul elektrisch ausschliesslich dank der Spule 23 gespeist wird, so dass ein Zutritt sogar dann möglich wird, wenn die Batterien der Mobilstation 1 entladen sind.

Der Fachmann wird verstehen, dass diese Anwendungen lediglich in Form von nicht einschränkenden Beispielen angegeben werden. Allgemeiner ausgedrückt bezieht sich die Erfindung auf alle Verfahrenstypen, welche einen Schritt einer direkten Kommunikation mit einer SIM-Chipkarte und gegebenfalls einen Schritt einer konventionellen Kommunikation über ein konventionelles Funknetz umfassen.

Bei einer von der Erfindung abweichenden Ausführungsform erfolgt die Kommunikation zwischen den auf der Chipkarte 2 gespeicherten Daten und einer externen Vorrichtung 3 mithilfe einer Schnittstelle, welche in der mobilen Ausrüstung 1 angeordnet ist, anstatt direkt auf der Chipkarte 2. Die Kommunikation kann zum Beispiel mithilfe einer Antenne, einer Spule oder einem Infrarot-Sender-Empfänger, auf dem Gehäuse des drahtlosen Telefons 1 integriert, erfolgen. Diese Ausführungsform erfordert jedoch Abänderungen der Apparate 1 und kann folglich durch Abonnenten, welche mit konventionellen Kommunikationsstationen 1 ohne diese drahtlose Schnittstelle ausgerüstet sind, nicht auf einfache Weise angewendet werden.

## Patentansprüche

1. SIM-Chipkarte (2), enthaltend:
für die SIM-Funktionalitäten der Karte zuständige Datenverarbeitungsmittel (20), die Speichermittel (200) enthalten, welche das Speichern von Daten ermöglichen, die mindestens Identifikationsdaten eines Abonnenten in einem Mobiltelekommunikationsnetz enthalten,
elektrische Kontakte (24) auf der Oberfläche der SIM-Chipkarte, welche das Austauschen von Daten zwischen den genannten Verarbeitungsmitteln (20) und einer Mobilstation (1) ermöglichen, in welche die SIM-Chipkarte (2) in wegnehmbarer Weise eingeführt werden kann,
mindestens eine weitere Schnittstelle, welche eine Datenübertragung zwischen den genannten Verarbeitungsmitteln (20) und einer externen Vorrichtung (3) ermöglicht,
**dadurch gekennzeichnet, dass** die genannte weitere Schnittstelle eine drahtlose Schnittstelle (21, 23) ist, welche ermöglicht Daten direkt und ohne elektrische Kontakte zu passieren zwischen den genannten Verarbeitungsmitteln (20) und einer sich ausserhalb der Mobilstation (1) befindenden externen Vorrichtung (3) zu übertragen, wenn die SIM-Chipkarte in der Mobilstation (1) eingeführt ist, wobei diese kontaktlose Datenübertragung durch die Mobilstation (1) über die genannten elektrischen Kontakte (24) gesteuert werden kann.

2. SIM-Chipkarte nach dem vorangehenden Anspruch, **dadurch gekennzeichnet, dass** die genannte drahtlose Schnittstelle mindestens eine Spule (23) enthält, welche den Aufbau einer Kommunikation über elektromagnetische Wellen zwischen den genannten Verarbeitungsmitteln (20) und der genannten externen Vorrichtung (3) ermöglicht.

3. SIM-Chipkarte nach dem vorangehenden Anspruch, **dadurch gekennzeichnet, dass** die genannten Verarbeitungsmittel folgendes umfassen: einen Mikrokontroller (20), welcher für die genannten SIM-Funktionalitäten der Karte zuständig ist, mindestens ein Elektronikmodul (21), welches mit der genannten Spule (23) verbunden und für die direkte Kommunikation mit der genannten externen Vorrichtung (3) zuständig ist, und eine Schnittstelle (22) zwischen dem genannten Mikrokontroller und dem genannten Elektronikmodul.

4. SIM-Chipkarte nach dem vorangehenden Anspruch, **dadurch gekennzeichnet, dass** die elektrische Speisung des genannten Elektronikmoduls und der genannten Spule von der genannten Mobilstation (1) her über die genannten elektrischen Kontakte (24) erfolgt.

5. SIM-Chipkarte nach Anspruch 3, **dadurch gekennzeichnet, dass** die elektrische Speisung des genannten Elektronikmoduls (21) und der genannten Spule (23) von der genannten externen Vorrichtung her erfolgt, durch Zwischenschaltung der genannten Spule, so dass eine Funkkommunikation zwischen der SIM-Chipkarte (2) und der externen Vorrichtung (3) auch dann möglich wird, wenn die Batterien der Mobilstation (1) entladen sind.

6. SIM-Chipkarte nach einem der vorangehenden Ansprüche, **dadurch gekennzeichnet, dass** die Verarbeitungsmittel (20, 21) in der Lage sind, Instruktionen in der JAVA-Sprache auszuführen.

7. Mobilstation (1), enthaltend Mittel zur Kommunikation in einem Mobiltelekommunikationsnetz und eine Aufnahmestelle (10) zum Einführen einer wegnehmbaren SIM-Chipkarte (2), welche zum Speichern von Daten bestimmt ist, die mindestens Identifikationsdaten eines Abonnenten im genannten Mobiltelekommunikationsnetz enthalten,
**gekennzeichnet durch** mindestens eine drahtlose Schnittstelle (21, 23), welche eine Datenübertragung zwischen der in der Mobilstation eingeführten genannten SIM-Chipkarte (20) und einer ausserhalb der Mobilstation (1) befindlichen externen Vorrichtung (3) ermöglicht, ohne Beanspruchung des genannten mobilen Mobiltelekommunikationsnetzes, wobei diese Datenübertragung **durch** die Mobilstation (1) gesteuert werden kann.

8. Mubilstation nach dem vorangehenden Anspruch, **dadurch gekennzeichnet, dass** die genannte drahtlose Schnittstelle mindestens eine Spule (23) enthält, welche es der genannten SIM-Chipkarte (2) ermöglicht, über elektromagnetische Wellen mit der genannten externen Vorrichtung (3) zu kommunizieren.

9. Mobilstation nach dem vorangehenden Anspruch, **dadurch gekennzeichnet, dass** die genannte Spule (23) in der genannten SIM-Chipkarte (2) integriert ist.

10. Mobilstation nach Anspruch 8, **dadurch gekennzeichnet, dass** sie im Weiteren elektrische Batterien enthält, und dass die genannte drahtlose Schnittstelle (21, 23) durch die genannte externe Vorrichtung (3) gespeist werden kann, durch Zwischenschaltung der genannten Spule (23), so dass eine Funkkommunikation zwischen der SIM-Chipkarte (2) und der externen Vorrichtung (3) auch dann möglich wird, wenn die genannten elektrischen Batterien entladen sind.

11. Mobilstation nach einem der Ansprüche 8 bis 10, **dadurch gekennzeichnet, dass** die genannte Aufnahmestelle (10) nach aussen hin nicht elektromagnetisch abgeschirmt ist.

12. Mobilstation nach Anspruch 7, **dadurch gekennzeichnet, dass** die genannte drahtlose Schnittstelle mindestens einen Infrarot-Sender-Empfänger auf dem Gehäuse der genannten Station-enthält.

13. Mobilstation nach einem der Ansprüche 7 bis 12, **dadurch gekennzeichnet, dass** sie im weiteren Steuermittel (13) für einen Kursor und eine Bestätigungstaste (11) enthält.

14. Mobilstation nach einem der Ansprüche 7 bis 13, **dadurch gekennzeichnet, dass** die genannte Datenübertragung mit der Tastatur der Mobilstation (1) gesteuert werden kann.

15. Datenverarbeitungs-Vorrichtung (3), die eine drahtlose Schnittstelle (30) enthält, welche drahtlose Schnittstelle (30) ermöglicht, direkt mit einer SIM-Chipkarte (2) nach einem der Ansprüche 1 bis 6 zu kommunizieren, welche SIM-Chipkarte (2) in eine Mobilstation (1) nach einem der Ansprüche 7 bis 14 eingeführt ist, ohne Beanspruchung eines mobilen Funknetzes.

16. Datenverarbeitungs-Vorrichtung nach dem vorangehenden Anspruch, **dadurch gekennzeichnet, dass** die genannte Schnittstelle mindestens einen Sender-Empfänger (30) enthält, welcher den Aufbau einer Kommunikation über elektromagnetische Wellen mit einer SIM-Chipkarte (2) nach einem der Ansprüche 2 bis 6 ermöglicht.

17. Datenverarbeitungs-Vorrichtung nach einem der Ansprüche 14 oder 15, **dadurch gekennzeichnet, dass** sie folgendes enthält: Mittel zur Anzeige eines Mehrfachauswahl-Menus, und Mittel zur Veränderung der Position eines Kursors im genannten Menu bzw. zum Ausführen eines der erfolgten Auswahl im genannten Menu entsprechenden Verfahrens, als Reaktion auf die Kursor-Verschiebe- bzw. Bestätigungsinstruktionen, welche an der genannten drahtlosen Schnittstelle empfangen worden sind.

18. Datenverarbeitungs-Vorrichtung nach dem vorangehenden Anspruch, **dadurch gekennzeichnet, dass** sie eine Schnittstelle (31) des "Internet"-/ "Intranet"-Typs enthält.

19. Datenverarbeitungs-Vorrichtung nach einem der Ansprüche 15 bis 18, **dadurch gekennzeichnet, dass** sie in einer monetären Vorrichtung integriert ist.

20. Datenverarbeitungs-Vorrichtung nach einem der Ansprüche 15 bis 18, **dadurch gekennzeichnet, dass** sie in einer Zutrittskontroll-Vorrichtung integriert ist.

21. Verfahren der Kommunikation zwischen einer externen Vorrichtung (3) und einer Mobilstation (1), welche folgendes enthält: Mittel zur Kommunikation in einem mobilen Funknetz und eine Aufnahmestelle (10) zum Einführen einer wegnehmbaren SIM-Chipkarte (2), welche zum Speichern von Daten bestimmt ist, die mindestens Identifikationsdaten eines Abonnenten im genannten mobilen Funknetz enthalten,
**dadurch gekennzeichnet, dass** es mindestens einen Schritt der direkten Kommunikation zwischen der in der Mobilstation eingeführten genannten SiM-Chipkarte (2) und der genannten externen Vorrichtung (3) umfasst, ohne Beanspruchung des genannten mobilen Funknetzes,
wobei diese direkte Kommunikation durch die Mobilstation (1) gesteuert werden kann.

22. Verfahren nach dem vorangehenden Anspruch, **dadurch gekennzeichnet, dass** die genannte Kommunikation bidirektional ist.

23. Verfahren nach dem vorangehenden Anspruch, **dadurch gekennzeichnet, dass** die genannte Kommunikation eine Kommunikation über elektromagnetische Wellen ist, was mindestens eine Spule (23) voraussetzt, welche in der genannten SIM-Chipkarte integriert ist.

24. Verfahren nach einem der Ansprüche 21 bis 23, **dadurch gekennzeichnet, dass** es folgendes umfasst : mindestens einen Schritt der Anzeige eines Menus mit Mehrfachauswahl auf einem Display der genannten Datenverarbeitungs-Vorrichtung,
mindestens einen Schritt der Auswahl einer der im Menu zur Auswahl stehenden Optionen durch den Benutzer der genannten Mobilstation,
mindestens einen Schritt der Kommunikation von Auswahlinstruktionen, welche direkt durch die genannte Mobilstation zur genannten externen Vorrichtung gesendet werden, ohne Beanspruchung des genannten mobilen Funknetzes,
mindestens einen Schritt der Ausführung eines Verfahrens, welches der im Menu getroffenen Auswahl entspricht, durch die genannte externe Vorrichtung.

25. Verfahren nach einem der Ansprüche 21 bis 24, **dadurch gekennzeichnet, dass** die genannte Kommunikation die Aussendung von mindestens einer Instruktion in einer objektorientierten Sprache, z.B. JAVA, durch die genannte externe Vorrichtung umfasst, wobei diese Instruktion zur Ausführung durch Verarbeitungsmittel (20, 21) in der SIM-Chipkarte (2) bestimmt ist.

26. Verfahren nach einem der Ansprüche 21 bis 25, **dadurch gekennzeichnet, dass** die genannte Kommunikation die Aussendung von mindestens einer Instruktion in einer objektorientierten Sprache, zum Beispiel in der JAVA-Sprache, durch die genannte SIM-Chipkarte (2) umfasst, wobei diese Instruktion zur Ausführung durch Verarbeitungsmittel in der genannten externen Vorrichtung (3) bestimmt ist.

27. Verfahren nach einem der Ansprüche 21 bis 26, **dadurch gekennzeichnet, dass** die genannte Kommunikation die Übertragung von Daten zwischen der genannten externen Vorrichtung (3) und der genannten SIM-Chipkarte (2) umfasst, von welchen Daten mindestens gewisse in der genannten SIM-Chipkarte (2) gespeichert werden.

28. Verfahren nach dem vorangehenden Anspruch, **dadurch gekennzeichnet, dass** die genannte SIM-Chipkarte einen mit der genannten Karte verwendbaren Geldbetrag speichert, und dass die genannten Daten die Angabe eines Nachladewertes für den genannten Geldbetrag umfassen.

29. Verfahren nach dem vorangehenden Anspruch, **dadurch gekennzeichnet, dass** es im Weiteren einen nachfolgenden Schritt der Aussendung einer die genannten Daten enthaltenden Kurzmeldung durch die genannte Mobilstation umfasst.

## Claims

1. SIM chipcard (2) comprising:
data processing means (20) responsible for the card's SIM-functionality and containing storage means (200) which make it possible to store data containing at least identification data for a subscriber in a mobile telecommunications network;
electrical contacts (24) on the surface of the SIM chipcard, which make it possible to exchange data between the said processing means (20) and a mobile station (1), in which the SIM chipcard (2) may be inserted in a removable fashion;
at least one further interface which enables the data transmission between the said data processing means (20) and an external device (3);
**characterised in that** the said further interface is a wireless interface (21, 23), which makes it possible to transmit data between the said processing means (20) and an external device (3) located outside the mobile station (1) directly and without passing electrical contacts when the SIM chipcard is inserted in the mobile station (1), this contactless data transmission being controlled by the mobile station (1) via the said electrical contacts (24).

2. SIM chipcard according to the preceding claim, **characterised in that** the said wireless interface contains at least one coil (23), which enables the establishment of communication between the said processing means (20) and the said external device (3) via electromagnetic waves.

3. SIM chipcard according to the preceding claim, **characterised in that** the said processing means comprise a microcontroller (20) responsible for the said SIM-functionality of the card, at least an electronic module (21) connected to the said coil (23) and responsible for the direct communication with the said external device (3), and an interface (22) between the said microcontroller and the said electronic module.

4. SIM chipcard according to the preceding claim, **characterised in that** the electrical power supply of the said electronic module and of the said coil is provided by the said mobile station (1) via the said electrical contacts (24).

5. SIM chipcard according to claim 3, **characterised in that** the electrical power supply of the said electronic module (21) and of the said coil (23) is provided by the said external device by interposing the said coil, so that radio communication between the SIM chipcard (2) and the extemal device (3) is possible even if the batteries of the mobile station (1) are run down.

6. SIM chipcard according to one of the preceding claims, **characterised in that** the processing means (20, 21) are capable of executing instructions in the Java language.

7. Mobile station (1) comprising means for communicating in a mobile telecommunications network and a receiving point (10) for inserting a removable SIM chipcard (2), which is intended for storing data containing at least the identification data of a subscriber of the said mobile telecommunications network,
**characterised by** at least one wireless interface (21, 23) enabling a data transmission between the said SIM chipcard (20), inserted in the mobile station, and an external device (3), located outside the mobile station (1), without using the said mobile telecommunications network, whereby this data transmission can be controlled by the mobile station (1).

8. Mobile station according to the preceding claim, **characterised in that** the said wireless interface contains at least one coil (23), which makes it possible for the said SIM chipcard (2) to communicate with the said external device (3) via electromagnetic waves.

9. Mobile station according to the preceding claim, **characterised in that** the said coil (23) is integrated in the said SIM chipcard (2).

10. Mobile station according to claim 8; **characterised in that** it further comprises electrical batteries, and **in that** the said wireless interface (21, 23) can be supplied with energy by the said external device (3) by interposing the said coil (23) so that radio communication between the SIM chipcard (2) and the external device (3) is possible even if the said electrical batteries are run down.

11. Mobile station according to one of the claims 8 to 10, **characterised in that** the said receiving point (10) is not shielded electromagnetically to the outside.

12. Mobile station according to claim 7, **characterised in that** the said wireless interface contains at least one infrared transmitter-receiver on the housing of the said station.

13. Mobile station according to one of the claims 7 to 12, **characterised in that** it further comprises a confirmation key (11) and control means (13) for a cursor.

14. Mobile station according to one of the claims 7 to 13, **characterised in that** the said data transmission can be controlled with the keyboard of the mobile station (1).

15. Data processing device (3), containing a wireless interface (30), which wireless interface (30) makes it possible to communicate directly with a SIM chipcard (2) according to one of the claims 1 to 6, which SIM chipcard (2) is inserted into a mobile station (1) according to one of the claims 7 to 14, without using the said mobile radio network.

16. Data processing device according to the preceding claim, **characterised in that** the said interface contains at least a transmitter-receiver (30) which enables the establishment of communication with a SIM chipcard (2) according to one of the claims 2 to 6 via electromagnetic waves.

17. Data processing device according to one of the claims 14 or 15, **characterised in that** it contains the following: means for displaying a multiple-choice menu, and means for changing the position of a cursor in the said menu, respectively for executing a method corresponding to the choice made in the said menu, as the reaction to the cursor movement, respectively confirmation instructions which have been received at the said wireless interface.

18. Data processing device according to the preceding claim, **characterised in that** it contains an interface (31) of the Internet-/Intranet-type.

19. Data processing device according to one of the claims 15 to 18, **characterised in that** it is integrated in a monetary device.

20. Data processing device according to one of the claims 15 to 18, **characterised in that** it is integrated in an access control device.

21. Method for communication between an external device (3) and a mobile station (1) comprising means for communication in a mobile radio network and a receiving point (10) for inserting a removable SIM chipcard (2), intended for storing data containing at least identification data of a subscriber of the said mobile radio network,
**characterised in that** it comprises at least a step of direct communication between the said SIM chipcard (2) inserted into the mobile station and the said external device (3), without use of the said mobile radio network; and
**in that** this direct communication may be controlled by the mobile station (1).

22. Method according to the preceding claim, **characterised in that** the said communication is bi-directional.

23. Method according to the preceding claim, **characterised in that** the said communication is communication via electromagnetic waves, which requires at least one coil (23), which is integrated in the said SIM chipcard.

24. Method according to one of the claims 21 to 23, **characterised in that** it comprises the following: at least a step of displaying a menu with multiple choice on a display of the said data processing device;
at least a step of selecting one of the options available for selection in the menu by the user of the said mobile station;
at least a step of communicating selection instructions, which are sent directly to the said external device by the said mobile station, without using the said mobile radio network;
at least a step of executing a method, corresponding to the choice made in the said menu, by the said external device.

25. Method according to one of the claims 21 to 24, **characterised in that** the said communication comprises the emission of at least one instruction in an object-oriented language, e.g. Java, by the said external device, whereby this instruction is intended to be executed by processing means (20, 21) in the SIM chipcard (2).

26. Method according to one of the claims 21 to 25, **characterised in that** the said communication comprises the emission of at least one instruction in an object-oriented language, for example in the Java language, by the said SIM chipcard (2), whereby this instruction is intended to be executed by processing means in the said external device (3).

27. Method according to one of the claims 21 to 26, **characterised in that** the said communication comprises transmitting data between the said external device (3) and the said SIM chipcard (2), at least certain of which data are stored in the said SIM chipcard (2).

28. Method according to the preceding claim, **characterised in that** the said SIM chipcard stores a monetary amount usable with the said card, and **in that** the said data comprises indication of a reload-value for the said monetary amount.

29. Method according to the preceding claim, **characterised in that** it further comprises a subsequent step of emitting a short message, containing the said data, by the said mobile station.

## Revendications

1. Carte à puce SIM (2) contenant :
des moyens de traitement des données (20) chargés des fonctions SIM de cette carte et comportant des moyens de mise en mémoire (200) qui permettent l'enregistrement de données comprenant au moins des données d'identification d'un abonné dans un réseau de télécommunications mobiles,
des contacts électriques (24) à la surface de la carte à puce SIM, qui permettent l'échange de données entre les moyens de traitement mentionnés (20) et une station mobile (1), et dans lesquels la carte à puce SIM (2) peut être introduite de manière amovible,
au moins une autre interface qui permet la transmission de données entre les moyens de traitement (20) mentionnés et un dispositif extérieur (3),
**caractérisée en ce que** l'autre interface mentionnée est une interface sans fil (21, 23) qui permet de faire passer des données, directement et sans contacts électriques, entre les moyens de traitement (20) et un dispositif extérieur (3) qui se trouve en dehors de la station mobile (1) quand la carte à puce SIM est en place dans celle-ci, cette transmission de données sans contact pouvant être commandée par la station mobile (1) par l'intermédiaire des contacts électriques (24) mentionnés.

2. Carte à puce SIM selon la revendication précédente, **caractérisée en ce que** l'interface sans fil mentionnée comporte au moins une bobine (23) qui permet l'établissement d'une communication, par l'intermédiaire d'ondes électromagnétiques, entre les moyens de traitement mentionnés (20) et le dispositif extérieur mentionné (3).

3. Carte à puce SIM selon la revendication précédente, **caractérisée en ce que** les moyens de traitement mentionnés comprennent les éléments suivants : un superviseur de micro-ordinateur (20) qui est responsable des fonctions SIM mentionnées de la carte, au moins un module électronique (21) qui est relié à la bobine (23) et chargé de la communication directe avec le dispositif extérieur (3), et une interface (22) entre le superviseur de micro-ordinateur et le module électronique.

4. Carte à puce SIM selon la revendication précédente, **caractérisée en ce que** l'alimentation électrique du module électronique et de la bobine se fait depuis la station mobile (1) par l'intermédiaire des contacts électriques (24).

5. Carte à puce SIM selon la revendication 3, **caractérisée en ce que** l'alimentation électrique du module électronique (21) et de la bobine (23) se fait, depuis le dispositif extérieur mentionné, par intercalage de la bobine, de telle sorte qu'une communication par radio entre la carte à puce SIM (2) et le dispositif extérieur (3) est possible même si les piles ou les accumulateurs de la station mobile (1) sont déchargés.

6. Carte à puce SIM selon l'une des revendications précédentes, **caractérisée en ce que** les moyens de traitement (20, 21) sont en mesure d'exécuter des instructions données en langage JAVA.

7. Station mobile (1) comportant des moyens de communication dans un réseau de télécommunications mobiles et un réceptacle (10) servant à l'introduction d'une carte à puce SIM (2) amovible destinée à la mise en mémoire de données parmi lesquelles figurent au moins les données d'identification d'un abonné dans le réseau de télécommunications mobiles mentionné,
**caractérisée par** au moins une interface sans fil (21, 23) qui permet la transmission de données entre la carte à puce SIM (2) en place dans la station mobile et un dispositif extérieur (3), situé en dehors de la station mobile (1), sans recours au réseau de télécommunications mobiles mentionné, cette transmission de données pouvant être commandée par la station mobile (1).

8. Station mobile selon la revendication précédente, **caractérisée en ce que** l'interface sans fil comporte au moins une bobine (23) qui permet à la carte à puce SIM (2) de communiquer avec le dispositif extérieur (3) par l'intermédiaire d'ondes électromagnétiques.

9. Station mobile selon la revendication précédente, **caractérisée en ce que** la bobine (23) est intégrée à la carte à puce SIM (2).

10. Station mobile selon la revendication 8, **caractérisée en ce qu'**elle contient en outre des piles électriques ou des accumulateurs et **en ce que** l'interface sans fil mentionnée (21, 23) peut être alimentée par le dispositif extérieur (3) grâce à l'intercalation de la bobine mentionnée (23), de telle sorte qu'une communication par radio entre la carte à puce SIM (2) et le dispositif extérieur (3) est possible même quand les piles électriques ou les accumulateurs sont déchargés.

11. Station mobile selon l'une des revendications 8 à 10, **caractérisée en ce que** le réceptacle mentionné (10) n'est pas blindé électromagnétiquement vers l'extérieur.

12. Station mobile selon la revendication 7, **caractérisée en ce que** l'interface sans fil comporte au moins un émetteur-récepteur à infrarouge sur le boîtier de cette station mobile.

13. Station mobile selon l'une des revendications 7 à 12, **caractérisée en ce qu'**elle est pourvue en outre de moyens de commande (13) pour un curseur et d'une touche de confirmation (11).

14. Station mobile selon l'une des revendications 7 à 13, **caractérisée en ce que** la transmission des données peut être commandée avec le clavier de la station mobile (1).

15. Dispositif de traitement des données (3) comportant une interface sans fil (30) qui permet de communiquer directement avec une carte à puce SIM (2) conforme à l'une des revendications 1 à 6, cette carte à puce SIM (2) étant en place dans une station mobile (1) conforme à l'une des revendications 7 à 14, sans recours à un réseau de télécommunications mobiles.

16. Dispositif de traitement des données selon la revendication précédente, **caractérisé en ce que** l'interface comporte au moins un émetteur-récepteur (30) qui permet d'établir une communication, par l'intermédiaire d'ondes électromagnétiques, avec une carte à puce SIM (2) conforme à l'une des revendications 2 à 6.

17. Dispositif de traitement des données selon la revendication 14 ou 15, **caractérisé en ce qu'**il comporte les éléments suivants : moyens d'affichage d'un menu à choix multiples et moyens de modification de la position d'un curseur dans le menu mentionné ou d'exécution d'une procédure correspondant au choix effectué dans le menu mentionné, comme réaction aux instructions de déplacement et de confirmation du curseur qui ont été reçues à l'interface sans fil.

18. Dispositif de traitement des données selon la revendication précédente, **caractérisé en ce qu'**il comporte une interface (31) du type "Internet-Intranet".

19. Dispositif de traitement des données selon l'une des revendications 15 à 18, **caractérisé en ce qu'**il est intégré à un dispositif de monétique.

20. Dispositif de traitement des données selon l'une des revendications 15 à 18, **caractérisé en ce qu'**il est intégré à un dispositif de contrôle d'accès.

21. Procédé de communication entre un dispositif extérieur (3) et une station mobile (1), comprenant les éléments suivants : des moyens de communication dans un réseau de télécommunications mobile et un réceptacle (10) servant à l'introduction d'une carte à puce SIM (2) amovible destinée à la mise en mémoire de données comprenant au moins des données d'identification d'un abonné au réseau de télécommunications mobiles mentionné,
**caractérisé en ce qu'**il comprend au moins une étape de communication directe entre la carte à puce SIM (2) placée dans la station mobile et le dispositif extérieur (3), sans recours au réseau de télécommunications mobiles, cette communication directe pouvant être commandée par la station mobile (1).

22. Procédé selon la revendication précédente, **caractérisé en ce que** la communication est bidirectionnelle.

23. Procédé selon la revendication précédente, **caractérisé en ce que** la communication a lieu par l'intermédiaire d'ondes électromagnétiques, ce qui exige au moins une bobine (23) intégrée à la carte à puce SIM.

24. Procédé selon l'une des revendications 21 à 23, **caractérisé en ce qu'**il comprend les éléments suivants :
au moins une étape d'affichage d'un menu à choix multiples sur un écran du dispositif mentionné de traitement des données,
au moins une étape de sélection, par l'utilisateur de la station mobile, d'une des options disponibles,
au moins une étape de communication d'instructions de sélection qui sont envoyées directement, par la station mobile, au dispositif extérieur mentionné, sans recours au réseau de télécommunications mobiles,
au moins une étape d'exécution, par le dispositif extérieur, d'un procédé correspondant au choix effectué dans le menu.

25. Procédé selon l'une des revendications 21 à 24, **caractérisé en ce que** la communication en question comprend l'envoi d'au moins une instruction dans un langage orienté objet, par exemple JAVA, par le dispositif extérieur, cette instruction étant destinée à être exécutée par des moyens de traitement (20, 21) qui se trouvent sur la carte à puce SIM (2).

26. Procédé selon l'une des revendications 21 à 25, **caractérisé en ce que** la communication en question comprend l'envoi d'au moins une instruction dans un langage orienté objet, par exemple JAVA, par la carte à puce SIM (2), cette instruction étant destinée à être exécutée par des moyens de traitement qui se trouvent dans le dispositif extérieur (3).

27. Procédé selon l'une des revendications 21 à 26, **caractérisé en ce que** la communication comprend la transmission de données entre le dispositif extérieur (3) et la carte à puce SIM (2), au moins certaines de ces données étant mises en mémoire sur la carte à puce SIM (2).

28. Procédé selon la revendication précédente, **caractérisé en ce que** la carte à puce SIM enregistre une somme d'argent pouvant être utilisée avec ladite carte, et **en ce que** les données en question comprennent l'indication d'un montant de rechargement pour la somme d'argent mentionnée.

29. Procédé selon la revendication précédente, **caractérisé en ce qu'**il comprend en outre une étape suivante consistant en l'envoi d'un message court, contenant les données en question, par la station mobile.
